# EUROPÄISCHE PATENTSCHRIFT

(11) **EP 0 387 564 B1**
(45) Veröffentlichungstag und Bekanntmachung des Hinweises auf die Patenterteilung: **11.08.1993**
(21) Anmeldenummer: 90103499.1
(22) Anmeldetag: 23.02.1990
(51) Int. Cl.: A01K 5/01, A47G 19/08, A47G 19/03

(54) **Futterbehälter für Tiere**
Feed container for animals
Mangeoire pour animaux

(30) Priorität: 10.03.1989 DE 8902926 U
(43) Veröffentlichungstag der Anmeldung: 19.09.1990
(73) Patentinhaber: FRAUENBERGER & CO. MBH, D-30916 Isernhagen (DE)
(72) Erfinder: Frauenberger, Karl-Andreas, Dipl.-Ökonom, D-3006 Grossburgwedel (DE)
(74) Vertreter: König, Norbert, Dipl.-Phys. Dr.

(56) Entgegenhaltungen:
- EP-A- 0 172 587
- CH-A- 535 006
- DE-A- 3 033 974
- GB-A- 2 034 569
- US-A- 3 653 362
- US-A- 4 800 845

## Beschreibung

Die Erfindung betrifft einen Futterbehälter für Tiere mit einer Aufnahmevorrichtung für einen als Einweg-Futterbehältnis ausgebildeten, der Aufnahmevorrichtung angepaßten Einsatz.

Bisher ist es üblich, Futterbehälter aus Kunststoff, Glas, Metall oder anderen geeigneten Materialien zu verwenden. Diese Futterbehälter sollten täglich aus hygienischen Gründen gereinigt werden, was häufig unterbleibt. Da das Futter oft sehr stark am Behälter haftet, gestaltet sich das Reinigen relativ zeitaufwendig; häufig ist es notwendig, den Behälter mit Wasser zu füllen, um die anhaftenden Futterreste abzuweichen. Dies bedingt die Anschaffung mehrerer Futterbehälter.

Durch die GB-A-2 034 569 ist ein Tierfutterbehälter mit einem Gestell zur Aufnahme einer runden Einweg-Schale bekannt, die einen Bördelrand aufweist, mit dem die Einweg-Schale in einen Kreisring des Gestelles eingehängt wird.

Die DE-A-3 033 974 zeigt ein Haltegestell für einen runden Einmal-Futternapf mit rundem Deckel. Der Futternapf ist mit einem nach unten abgewinkelten sehr langen Rand ausgebildet, welcher das Haltegestell bei eingesetztem Futternapf außen übergreift.

Die Aufgabe der vorliegenden Erfindung besteht darin, einen Futterbehälter der eingangs genannten Art unter dem Gesichtspunkt der Verwendbarkeit einer Vielfalt von Einweg-Einsätzen und eines einfachen Aufbaus zu verbessern.

Zur Lösung dieser Aufgabe sind die Ausbildungen gemäß den Kennzeichen der Ansprüche 1, 2 und 3 vorgesehen.

Die beim erfindungsgemäßen Futterbehälter vorgesehene Aufnahmevorrichtung ist relativ einfach im Aufbau und gestattet die Verwendung auch von nicht exakt an die Aufnahmevorrichtung angepaßten Einweg-Einsätzen als Futterbehältnisse.

Vorteilhafte und zeckmäßige Weiterbildungen des erfindungsgemäßen Futterbehälters sind in den Unteransprüchen angegeben.

Die Erfindung soll nachfolgend anhand der beigefügten Zeichnung näher erläutert werden.

Es zeigt
- Fig. 1: eine erste Ausführungsform eines Futterbehälters für Tiere,
- Fig. 2: eine zweite Ausführungsform eines Futterbehälters für Tiere,
- Fig. 3 eine 3.: Ausführungsform des erfindungsgemäßen Futterbehälters,
- Fig. 4: den Futterbehälter nach Fig. 3 mit herausgenommenem Einsatz,
- Fig. 5 eine 4.: Ausführungsform eines erfindungsgemäßen Futterbehälters, der mit einem komplementär ausgebildeten Behälter kombiniert ist,
- Fig. 6: die Futterbehälteranordnung nach Fig. 5, wobei der eine Futterbehälter mit herausgenommenem Einsatz dargestellt ist,
- Fig. 7 eine 5.: Ausführungsform eines erfindungsgemäßen Futterbehälters, der mit den Behältern nach der Fig. 5 oder 6 kombiniert ist und
- Fig. 8: die Anordnung nach Fig. 7 mit teilweise herausgenommenen Einsätzen.

Die Zeichnung zeigt verschiedene Formen von Futterbehältern 2, die jeweils in ihrer Grundausstattung aus einer Aufnahmevorrichtung in Form eines Rahmens 4 oder Gestells 13 bestehen, in den bzw. in das ein Einsatz 6 in Form eines Einwegbehälters aus einem umweltfreundlichen Material einsetzbar ist. Als solche Einsätze können bereits im Handel erhältliche Einweg-Standardbehältnisse, wie Einweg-Partyteller, -schalen usw., dienen.

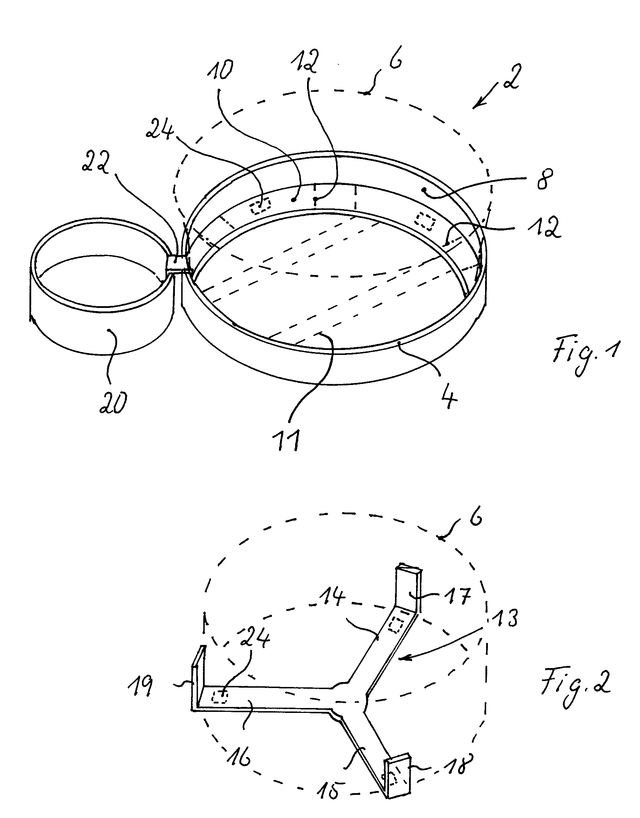

Der Rahmen 4 besteht bei der Ausführungsform nach Fig. 1 aus einem im Querschnitt L-förmigen, runden Profilrahmen mit aufrechter, umlaufender Wandung 8 und einem daran angeformten, einwärts zeigenden Ringflansch 10, der bodenseitig - wie dargestellt - oder abgesetzt vom Boden angeordnet sein kann. Der Ringflansch 10 dient zur Unterstützung des Einsatzes 6 und hat außerdem versteifende Funktion.

Der Ringflansch 10 kann aber auch fehlen. Anstelle des Ringflansches 10 können innenseitig auch mehrere am Innenumfang verteilt angeordnete einzelne Vorsprünge 12 vorgesehen sein, wie dies strichpunktiert eingezeichnet ist.

Es können auch bodenseitig Verstrebungen 11 vorgesehen werden (gestrichelt eingezeichnet).

Anstelle eines geschlossenen Rahmens kann auch eine mehrarmige Vorrichtung als Aufnahmevorrichtung für den Einsatz 6 dienen, wie dies die Fig. 2 zeigt. Die Aufnahmevorrichtung nach Fig. 2 besteht aus einem sternförmigen Gebilde 13 mit drei Armen 14, 15 und 16, an deren freien Enden aufrechte Abwinklungen 17, 18 und 19 ausgebildet sind.

Die Aufnahmevorrichtung, beispielsweise der Rahmen 4 oder das sternförmige Gebilde 13, kann mit weiteren Behältnissen, beispielsweise Schalen 20 für Wasser oder Hartfutter, kombiniert werden (vgl. Fig. 1). Hierzu sind Klemmmittel 22 vorgesehen, mit denen die Schalen oder dergleichen und die Aufnahmevorrichtung miteinander lösbar verbunden werden können. Anstelle separater Klemmittel können auch Rastmittel oder andere geeignete Mittel an den Schalen und der Aufnahmevorrichtung selbst zum Verbinden derselben vorgesehen werden.

Um ein Rutschen des Futterbehälters bei der Futteraufnahme durch das Tier zu vermeiden, sind unterseitig rutschhemmende Mittel, wie Gummifüße 24 oder dgl., vorgesehen, vgl. Fig. 2.

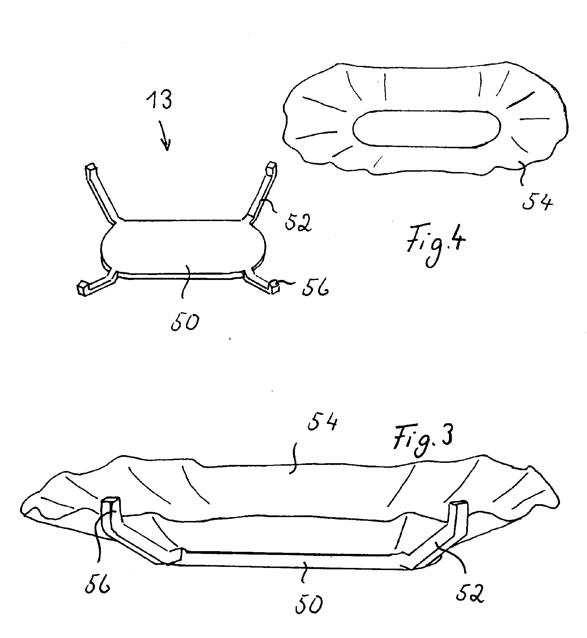

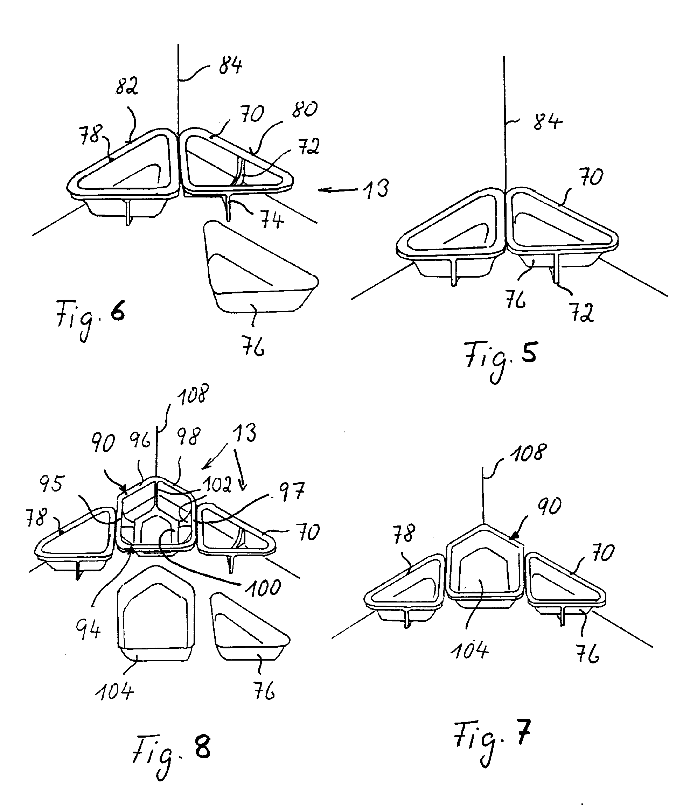

Die Fig. 3 und 4 zeigen ein Aufnahmegestell 13 mit einer etwa ovalen Bodenplatte 40, die auch rund oder mehreckig ausgebildet sein kann. Von der Bodenplatte 50 streben vier Arme 52 schräg auswärts nach oben weg. Diese Arme 52 dienen zur Aufnahme und Halterung eines Einsatzes 54, vgl. insbesondere Fig. 3.

Die Arme 52 der Aufnahmegestelle nach den Fig. 3 und 4 weisen am freien Ende aufrechte Abwinklungen 56 auf, die den Rand des Einsatzes 54 übergreifen, um den Halt für die Einsätze zu verbessern.

Die Fig. 5 und 6 zeigen ein Aufnahmegestell 13 mit einem Rahmen 70 in Form eines rechtwinkligen, gleichschenkligen Dreiecks und mit einem sternförmigen Fuß 72, der nach oben gerichtete Abwinklungen 74 aufweist, die mit den Dreiecksseiten des Rahmens 70 verbunden sind. In den Rahmen 70 ist eine entsprechend dreieckförmig geformte Schale 76 einsetzbar. Der Futterbehälter aus Aufnahmegestell und Einsatz ist hier kombiniert mit einem komplementär dazu ausgebildeten Behälter 78, und zwar so, daß die beiden Grundseiten 80, 82 der Behälter im rechten Winkel zueinander angeordnet sind. Diese Behälterkombination kann so mit dem rechten Winkel in eine rechtwinklige Wandecke 84 gestellt werden, was den Vorteil hat, daß sie gegen Weiterschieben fixiert ist. Es ist natürlich auch möglich, nur einen der Behälter bzw. der Rahmen selbst mit dem rechten Winkel in die Raumecke zu stellen.

Die Fig. 7 und 8 zeigen neben dem Behälter nach den Fig. 5 und 6 eine weitere Ausführungsform eines Aufnahmegestelles 13 mit einem Rahmen 90 in Form eines Fünfecks 92 mit einem U-förmigen Teil 94, dessen freie Schenkel 95, 97 einwärts abgewinkelte Enden 96, 98 aufweisen, die unter einem rechten Winkel miteinander verbunden sind. Unterhalb dieses Rahmens 90 ist ein weiterer, analog zum Rahmen 90 ausgebildeter Bodenrahmen 100 geringerer Größe als Fuß angebracht, der über Verstrebungen 102 mit dem Rahmen verbunden ist. In den Rahmen 90 ist eine entsprechend ausgebildete Schale 104 einsetzbar. Der Rahmen 90 kann mit seiner rechtwinkligen Spitze 106 in eine Raumecke 108 gestellt werden, und an seinen beiden Seiten 95, 97 können beispielsweise die dreieckförmigen Behälter nach den Fig. 5 und 6 angestellt werden, wie dies in den Fig. 7 und 8 dargestellt ist.

Die Aufnahmegestelle 13 bestehen vorzugsweise aus Kunststoff, und die Einsätze sind vorzugsweise Einwegbehältnisse aus umweltfreundlichem Material.

## Patentansprüche

1. Futterbehälter für Tiere mit einer Aufnahmevorrichtung für einen als Einweg-Futterbehältnis ausgebildeten, der Aufnahmevorrichtung angepaßten Einsatz, **dadurch gekennzeichnet,** daß die Aufnahmevorrichtung (13) einen zylindrischen Rahmen (4) mit umlaufender Wandung aufweist, der an der Unterseite oder abgesetzt von der Unterseite innenseitig einen umlaufenden Ringflansch (10) oder mehrere einwärts gerichtete Vorsprünge (12) oder unterseitig Verstrebungen (15) als Auflage für den Einsatz aufweist.

2. Futterbehälter für Tiere mit einer Aufnahmevorrichtung für einen als Einweg-Futterbehältnis ausgebildeten, der Aufnahmevorrichtung angepaßten Einsatz, **dadurch gekennzeichnet**, daß die Aufnahmevorrichtung (13) einen stern förmigen Boden (14, 15, 16) oder eine Bodenplatte (50) aufweist, von dem oder von der einzelne Arme (52) zur Aufnahme des Einweg-Futterbehältnisses (54) nach oben oder schräg auswärts wegstreben.

3. Futterbehälter für Tiere mit einer Aufnahmevorrichtung für einen als Einweg-Futterbehältnis ausgebildeten, der Aufnahmevorrichtung angepaßten Einsatz, **dadurch gekennzeichnet,** daß die Aufnahmevorrichtung (13) einen oder mehrere Sternförmigen Füße (72) aufweist, die einen Rahmen (70, 90) in Form eines rechtwinkligen, gleichschenkligen Dreiecks oder in Form eines Mehrecks mit wenigstens zwei rechtwinklig aneinanderstoßenden Rahmenseiten (96, 98) tragen.

4. Futterbehälter nach Anspruch 3, **dadurch gekennzeichnet,** daß mehrere der Rahmen (70) und (90) zusammenstellbar oder miteinander verbindbar sind, derart, daß ein Rahmenverbund entsteht, bei dem wiederum zwei Außenseiten senkrecht aneinanderstoßen.

5. Futterbehälter nach einem der vorhergehenden Ansprüche, **dadurch gekennzeichnet,** daß Klemmittel, Rastorgane oder Mittel zum Einhaken am Rahmen oder Gestell vorgesehen sind zum Verbinden mehrerer Rahmen oder Gestelle miteinander oder zum Befestigen von Schalen (20).

6. Futterbehälter nach einem der vorhergehenden Ansprüche, **dadurch gekennzeichnet,** daß die bodenseitigen Gestellteile unterseitig mit rutschhemmenden Mitteln (24) verbunden sind.

7. Futterbehälter nach einem der vorhergehenden Ansprüche, **dadurch gekennzeichnet,** daß die Rahmen oder Gestelle (4, 13) aus Kunststoff bestehen.

## Claims

1. A feed container for animals having a receptacle for an insert constructed as a disposable feed container and adapted to the receptacle,
**characterised in that** the receptacle (13) comprises a cylindrical frame (4) having a circumferential wall, which on the under side or offset from the under side comprises on the inside a circumferential annular flange (10) or several inwardly directed protrusions (12) or on the under side cross-struts (15) as a support for the insert.

2. A feed container for animals having a receptacle for an insert constructed as a disposable feed container and adapted to the receptacle,
**characterised in that** the receptacle (13) comprises a star-shaped base (14, 15, 16) or a base plate (50), from which the individual arms (52) for receiving the disposable feed container (54) extend upwardly or diagonally outwardly.

3. A feed container for animals having a receptacle for an insert constructed as a disposable feed container and adapted to the receptacle,
**characterised in that** the receptacle (13) comprises one or more star-shaped feet (72), which support a frame (70, 90) in the form of a right-angled, isosceles triangle or in the form of a polygon having at least two frame sides (96, 98) adjoining one another at right angles.

4. A feed container according to Claim 3,
**characterised in that** several of the frames (70) and (90) can be assembled or connected together so that a frame unit is produced in which two outer sides in turn adjoin at right angles .

5. A feed container according to one of the preceding Claims,
**characterised in that** clamping means, latching members or means for hooking onto the frame or stand are provided for connecting several frames or stands to one another or for attaching bowls (20).

6. A feed container according to one of the preceding Claims,
**characterised in that** the parts of the stand on the base side are connected on the under side to slip-resistant means (24).

7. A feed container according to one of the preceding Claims,
**characterised in that** the frames or stands (4, 13) are made from plastic.

## Revendications

1. Récipient pour pâtée pour animaux avec un dispositif de réception d'un insert, adapté au dispositif de réception, réalisé sous forme d'un récipient perdu pour pâtée,
caractérisé en ce que le dispositif de réception (13) présente un cadre cylindrique (4) à paroi continue qui présente vers l'intérieur, sur la face inférieure ou séparé de la face inférieure, un flasque annulaire continu (10) ou plusieurs saillies (12) dirigées vers l'intérieur ou, du côté inférieur, des entretoises (15), en tant que support pour l'insert.

2. Récipient pour pâtée pour animaux avec un dispositif de réception d'un insert, adapté au dispositif de réception, réalisé sous forme d'un récipient perdu pour pâtée,
caractérisé en ce que le dispositif de réception (13) présente un fond en forme d'étoile (14, 15, 16) ou une plaque de fond (50) duquel ou de laquelle s'écartent, vers le haut ou de manière inclinée vers l'extérieur, des bras (52) individuels pour recevoir le récipient perdu pour pâtée pour animaux (54).

3. Récipient pour pâtée pour animaux avec un dispositif de réception d'un insert, adapté au dispositif de réception, réalisé sous forme d'un récipient perdu pour pâtée,
caractérisé en ce que le dispositif de réception (13) présente un ou plusieurs pieds (72) en forme d'étoile qui porte un cadre (70, 90) sous forme d'un triangle rectangle isocèle ou sous forme d'un polygone avec au moins deux côtés du cadre (96, 98) s'aboutant perpendiculairement l'un à l'autre.

4. Récipient pour pâtée selon la revendication 3,
caractérisé en ce que plusieurs des cadres (70) et (90) peuvent être assemblés ou reliés les uns aux autres de telle manière qu'il en résulte un cadre composite dans lequel à nouveau deux côtés extérieurs s'aboutent perpendiculairement l'un à l'autre.

5. Récipient pour pâtée selon l'une des revendications précédentes,
caractérisé en ce que des moyens de serrage, des organes d'encliquetage ou des moyens d'accrochage au cadre ou châssis pour la liaison entre eux de plusieurs cadres ou châssis ou pour la fixation d'écuelles (20).

6. Récipient pour pâtée selon l'une des revendications précédentes,
caractérisé en ce que les parties de châssis du côté fond sont reliées à des moyens (24) freinant le glissement.

7. Récipient pour pâtée selon l'une des revendications précédentes,
caractérisé en ce que les cadres ou châssis (4, 13) sont constitués de matière synthétique.
